# EUROPÄISCHE PATENTSCHRIFT

(11) **EP 0 916 954 B1**
(45) Veröffentlichungstag und Bekanntmachung des Hinweises auf die Patenterteilung: **21.08.2002**
(21) Anmeldenummer: 98116483.3
(22) Anmeldetag: 01.09.1998
(51) Int. Cl.: G01P 21/02, G01P 3/489

(54) **Auswerteverfahren für ein Ausgangssignal einer eine zyklische Bewegung abtastenden Sensoreinrichtung**
Process for evaluating an output signal of a sensing device scanning a cyclic movement
Procédé d'évaluation d'un signal de sortie d'un dispositif capteur de mouvement cyclique

(30) Priorität: 11.11.1997 DE 19749791
(43) Veröffentlichungstag der Anmeldung: 19.05.1999
(73) Patentinhaber: WABCO GmbH & Co. OHG, 30453 Hannover (DE)
(72) Erfinder: Stanusch, Gerald, 31177 Harsum (DE); Holst, Hans, 30926 Seelze (DE)
(74) Vertreter: Schrödter, Manfred, Dipl.-Ing.

(56) Entgegenhaltungen:
- EP-A- 0 589 799
- WO-A-86/06172
- DE-A- 19 602 359

## Beschreibung

Die Erfindung bezieht sich auf ein Auswerteverfahren für ein Ausgangssignal einer eine zyklische Bewegung abtastenden Sensoreinrichtung, insbesondere eine Einrichtung zur Drehzahlerfassung, gemäß dem Oberbegriff des Patentanspruchs 1.

Ein derartiges Auswerteverfahren ist aus der EP 0 684 480 A1 sowie der DE 196 02 359 A1 bekannt.

Das aus der EP 0 684 480 A1 bekannte Auswerteverfahren dient zur Auswertung eines Signals, das von einer Einrichtung zur Erfassung der Drehzahl eines rotierenden Teils abgegeben wird. Bei einer Anwendung derartiger Einrichtungen in einem Fahrzeug kommen als rotierende Teile insbesondere die Fahrzeugräder in Betracht, deren Drehzahlen z. B. als Eingangssignale für eine Blockierschutzanlage (ABS) Verwendung finden.

Bei der dem bekannten Auswerteverfahren zugrundegelegten Einrichtung ist an dem rotierenden Teil ein mit Zähnen versehenes Impulsrad, das insbesondere bei Sensoreinrichtungen mit induktiver Wirkungsweise als Polrad bezeichnet wird, angeordnet, das mit einem an einem feststehenden Teil befestigten induktiven Sensor in Wirkverbindung steht und bei Rotation ein periodisches Signal in dem Sensor induziert, das aufgrund einer äquidistanten Anordnung der Zähne an dem Polrad bei gleichmäßiger Drehzahl eine gleichbleibende Frequenz aufweist. Die Frequenz dieses induzierten Signals stellt ein Maß für die Drehzahl bzw. nach entsprechender Umrechnung auch für die Drehgeschwindigkeit des rotierenden Teils dar.

Das Signal wird üblicherweise einem elektronischen Steuergerät zur Auswertung zugeführt. Das Auswerteverfahren ist dann als Programmsequenz für einen in dem Steuergerät angeordneten Mikroprozessor ausgeführt.

Bei Sensoreinrichtungen der zuvor beschriebenen Art kann es aufgrund von Beschädigungen des Polrades trotz gleichmäßiger Drehzahl zu einem ungleichmäßigen Signalverlauf kommen. So kann beispielsweise infolge eines Unfalls des Fahrzeuges ein Polrad derart beschädigt werden, daß einer oder mehrere Zähne fehlen. Dies führt zu fehlenden Signalperioden im Ausgangssignal des Sensors bzw. bei Empfang des Signals im Steuergerät. Bei herkömmlichen Auswerteverfahren kann dies zu unerwünschten Änderungen der aus dem empfangenen Signal ermittelten Drehgeschwindigkeit führen.

Das in dem gattungsbildenden Dokument DE 196 02 359 A1 offenbarte Auswerteverfahren dient zur Erkennung von zyklisch auftretenden Änderungen oder Einbrüchen des Ausgangssignals eines Sensors, die für mechanische Defekte wie verbogene oder entfernte Zähne einer mit dem Sensor in Wirkverbindung stehenden Zahnscheibe (entspricht dem Polrad gemäß der vorliegenden Patentanmeldung) charakteristisch sind, und die sich nach jeder vollen Umdrehung der Zahnscheibe wiederholen. Hierfür sieht das dortige Verfahren vor, die für solche Defekte charakteristischen Signaländerungen und die Tatsache der Wiederholung derselben Signaländerungen nach jeder vollen Umdrehung der Zahnscheibe zur Fehlererkennung auszunutzen. Das Vorliegen eines Defekts wird erst dann erkannt und signalisiert, wenn die charakteristische Signaländerung in einer bestimmten Anzahl von aufeinanderfolgenden Radumdrehungen auftritt. Es wird geprüft, ob eine bestimmte charakteristische Signaländerung sich mehrmals in direkter Folge nach jeder Radumdrehung wiederholt.

Der Erfindung liegt daher die Aufgabe zugrunde, ein verbessertes Auswerteverfahren für ein Ausgangssignal einer eine zyklische Bewegung abtastenden Sensoreinrichtung anzugeben, bei der infolge von Beschädigungen der Sensoreinrichtung auftretende anomale Signalverläufe mit geringem Aufwand zuverlässiger erkannt und angezeigt werden können.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung hat den Vorteil, in einfacher Weise als Programmsequenz für jede derzeit gängige Art von Mikroprozessor ausgeführt werden zu können. Hierfür ist insbesondere auch ein nur sehr geringer Speicherbedarf notwendig, was den Einsatz der Erfindung bei sehr einfachen, billigen Mikroprozessoren ermöglicht.

Durch die Einführung eines ersten und eines zweiten Überwachungszyklus, in dem jeweils die charakteristischen Signaländerungen gezählt werden, ist das Verfahren gemäß Patentanspruch 1 in der Lage, auf zufällige Störungen in dem Signal nicht fehlanzusprechen und trotzdem empfindlich auf Beschädigungen des Polrades reagieren und diese erkennen zu können. Durch das zweimalige Auswerten der charakteristischen Folge von Signaländerungen und den Vergleich dieser Folgen in den beiden Überwachungszyklen wird der speziellen Charakteristik von Polraddefekten Rechnung getragen.

Ein weiterer Vorteil der Erfindung besteht darin, daß eine Vielzahl unterschiedlichster Arten von Beschädigungen oder auch anderweitigen Manipulationen an der Sensoreinrichtung sicher erkannt wird. So wird einerseits selbstverständlich ein einzelner Defekt, z. B. ein fehlender Zahn an einem Polrad, erkannt, andererseits werden auch beliebige andere, zyklisch wiederkehrende Signalanomalitäten als fehlerhaft identifiziert. Dagegen führen sporadische, in der Praxis vorkommende und somit tolerierbare Signalstörungen nicht zu einer Fehlererkennung.

Ein anderer Vorteil der Erfindung ist ihre Anwendbarkeit für unterschiedlichste Arten von Sensoreinrichtungen. So kann neben der bereits zuvor beschriebenen induktiv arbeitenden Sensoreinrichtung auch eine optische Sensoreinrichtung, die z. B. mit einer Reflexionslichtschranke oder einer Gabellichtschranke und einem optischen Impulsrad statt einem Polrad arbeitet, verwendet werden. Bei derartigen optischen Sensoreinrichtungen können beispielsweise Verschmutzungen zu den unerwünschten, periodisch wiederkehrenden Signalstörungen führen.

Gemäß der Erfindung wird das Fehlersignal erst dann erzeugt, wenn die während eines vollständigen Überwachungszyklus festgestellten, ein vorbestimmtes Maß überschreitenden Änderungen des Periodenzeitwertes bzw. des daraus abgeleiteten Geschwindigkeitswertes erneut auftreten, die in gleicher oder nahezu gleicher Weise bereits bei wenigstens einem vorhergehenden, vollständigen Überwachungszyklus aufgetreten sind. Ein derartiger Überwachungszyklus umfaßt ein Vielfaches der Soll-Anzahl von Signalperioden eines Bewegungszyklus. Dies hat den Vorteil, daß aufgrund der längeren Überwachungsdauer auch bei Signalstörungen in dem Sensorsignal, die im Bereich der Ansprechschwelle der Sensoreinrichtung liegen und daher nur sporadisch auftreten, eine sichere Erzeugung des Fehlersignals gewährleistet ist.

In besonders vorteilhafter Weise umfaßt der Überwachungszyklus ein ganzzahliges Vielfaches der Soll-Anzahl von Signalperioden eines Bewegungszyklus.

Bei Einsatz der Erfindung in der Fahrzeugtechnik, z. B. in Verbindung mit Sensoreinrichtungen der eingangs beschriebenen Art zur Ermittlung von Drehgeschwindigkeiten von Fahrzeugrädern, kommt es vor, daß je nach Fahrzeugtyp oder Reifengröße Polräder mit unterschiedlicher Zähnezahl zum Einsatz kommen. Hierbei ist im allgemeinen wohl die Menge an unterschiedlichen, für den Einsatz in Betracht kommenden Polrädern bekannt. Es ist jedoch nicht immer von vornherein festgelegt, welches Polrad aus dieser Menge konkret zum Einsatz kommt, da dies häufig erst bei Inbetriebnahme des Fahrzeuges festgelegt wird.

Gemäß einer vorteilhaften Weiterbildung der Erfindung erfolgt daher eine Beobachtung und Zählung der Signalperioden zur Erkennung eines vollständigen Bewegungszyklus solange, bis eine Anzahl von Signalperioden aufgetreten ist, die dem kleinsten gemeinsamen Vielfachen der in Betracht kommenden Polrad-Zähnezahlen entspricht. Hierdurch kann ohne großen Aufwand und vor allem ohne eine manuelle Anpassung, z. B. eine Änderung des Steuerprogramms, des das Auswerteverfahren ausführenden Steuergerätes eine sichere Fehlererkennung auch bei unterschiedlichen Polrad-Zähnezahlen erfolgen.

Die Erfindung wird im folgenden unter Zuhilfenahme von Zeichnungen näher erläutert.

Es zeigen
- Fig. 1: eine Sensoreinrichtung mit einer daran angeschlossenen Einrichtung zur Ausführung des Auswerteverfahrens und
- Fig. 2 und 3: eine bevorzugte Ausführungsform des erfindungsgemäßen Auswerteverfahrens als zwei Teilabschnitte eines Flußdiagramms.

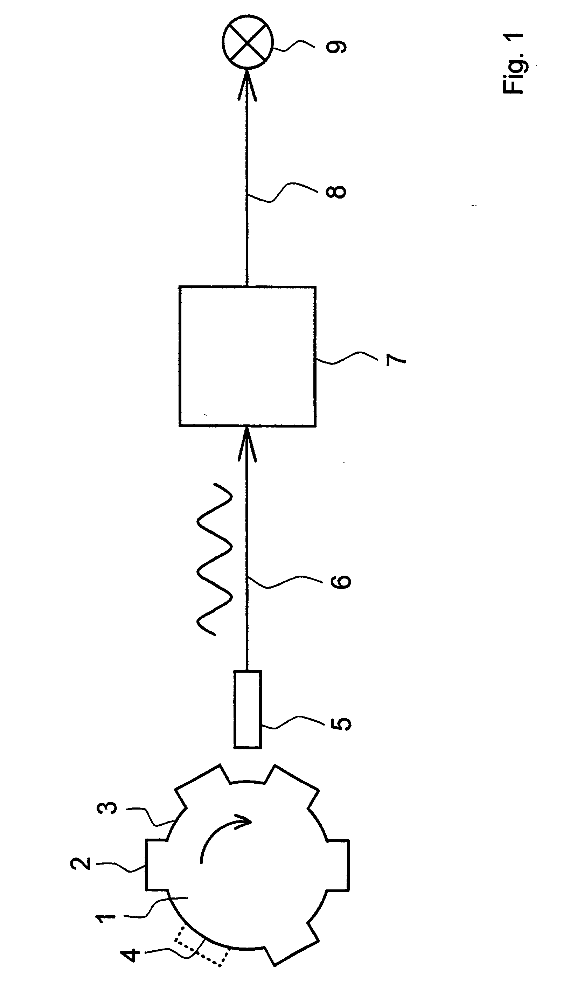

Die Darstellung gemäß Fig. 1 dient zur Erläuterung einer bevorzugten Anwendung des erfindungsgemäßen Verfahrens. Es ist dort schematisch ein drehbar angeordnetes Polrad (1), ein die Drehbewegung des Polrades (1) abtastender Sensor (5), ein als Einrichtung zur Ausführung des Verfahrens dienendes elektronisches Steuergerät (7) und eine als Anzeigeelement eines Fehlersignals dienende Lampe (9) dargestellt.

Das Polrad (1) und der Sensor (5) bilden zusammen eine induktiv wirkende Sensoreinrichtung bekannter Bauart, wie sie z. B. für die Sensierung der Drehzahlen von Fahrzeugrädern für Blockierschutzanlagen zum Einsatz kommt. Das Polrad (1) ist aus magnetisch leitfähigem Material gefertigt, z. B. Stahl, und der Sensor (5) weist wenigstens einen Permanentmagneten und eine elektrische Spule (beides nicht dargestellt) auf.

Am äußeren Umfang des Polrades (1) sind abwechselnd als Erhebungen ausgebildete Zähne (2) mit dazwischen liegenden Zahnlücken (3) in gleichmäßigen Abständen angeordnet. Ein an der Stelle (4) des äußeren Umfanges des Polrades (1) für eine gleichmäßige Signalabgabe eigentlich vorgesehener Zahn, der in der Fig. 1 gestrichelt dargestellt ist, fehlt z. B. infolge einer Beschädigung des Polrades (1).

Bei einer Drehung des Polrades (1) mit gleichmäßiger Drehzahl gibt der Sensor (5) über einen z. B. als elektrische Leitung ausgebildeten Signalpfad (6) ein periodisches Signal an das Steuergerät (7) ab. Im vorliegenden Beispiel ist für die Sensoreinrichtung konstruktionsseitig eine Soll-Anzahl von sechs Signalperioden pro Umdrehung des Polrades (1) vorgesehen. Aufgrund eines fehlenden Zahns an der Stelle (4) wird jedoch eine Signalperiode nicht erzeugt. Das periodische Signal weist in diesem Fall somit einen regelmäßig wiederkehrenden Verlauf auf, in dem nach jeweils vier Signalperioden mit gleichmäßiger, kurzer Periodendauer eine Signalperiode mit längerer Periodendauer auftritt.

Das Steuergerät (7) weist einen Mikroprozessor zur Ausführung des erfindungsgemäßen Auswerteverfahrens auf. Das von dem Sensor (5) über die Leitung (6) abgegebene Signal wird entweder direkt dem Mikroprozessor als Eingangssignal zugeführt, oder es wird mittels einer dem Mikroprozessor vorgeschalteten Auswerteschaltung bekannter Bauart in ein von dem Mikroprozessor verwertbares Signal umgewandelt. Hierdurch ist der Mikroprozessor in der Lage, die Periodendauer ankommender Signalperioden zu messen und mittels seines Steuerprogramms auszuwerten.

In einer vorteilhaften Ausgestaltung weist das Steuergerät (7) außerdem noch einen mit dem Mikroprozessor verbundenen, nichtflüchtigen Parameterspeicher, der nach Wahl lesbar und beschreibbar ist, zur Speicherung der für das jeweils verwendete Polrad in Betracht zu ziehenden Soll-Anzahl von Signalperioden auf. Hierdurch ist das Steuergerät (7) flexibel an unterschiedliche Bedürfnisse anpaßbar.

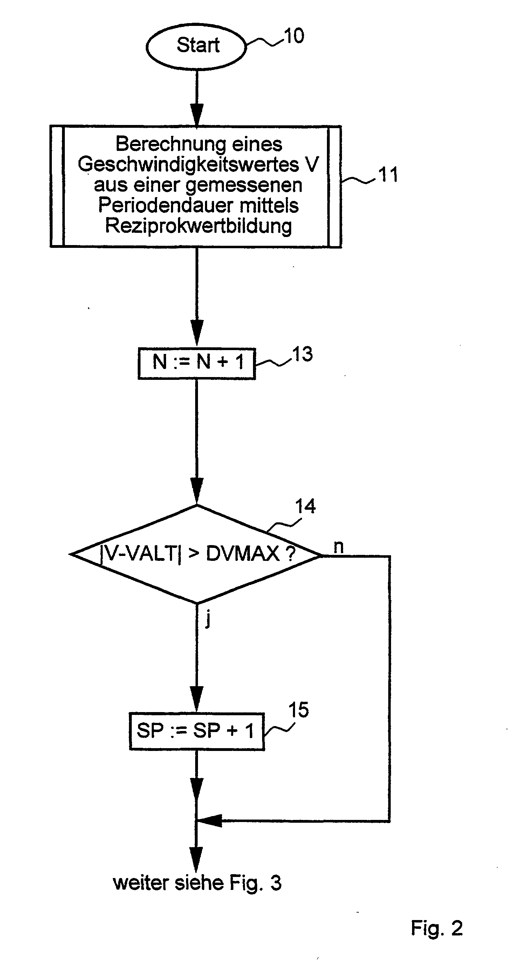

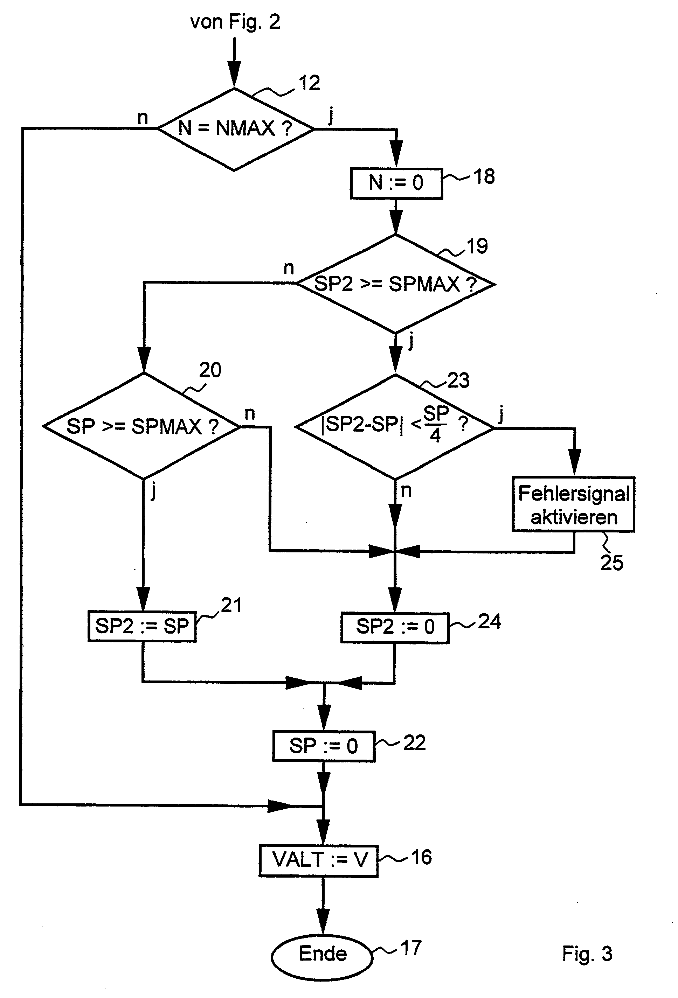

Unter Anwendung des in Zusammenhang mit den Fig. 2 und 3 noch näher zu erläuternden Auswerteverfahrens kann dann eine Beschädigung an dem Polrad (1), wie z. B. ein fehlender Zahn, erkannt und über ein optisches oder akustisches Signal angezeigt werden. Zu diesem Zweck weist das Steuergerät (7) ausgangsseitig ein mit dem Mikroprozessor verbundenes Schaltmittel, z. B. einen Transistor, auf, mittels dessen über einen z. B. als elektrische Leitung (8) ausgebildeten Signalpfad die als Fehleranzeigeeinrichtung dienende Lampe (9) eingeschaltet werden kann.

Die erwähnten, in dem Steuergerät angeordneten Teile wie Mikroprozessor, Auswerteschaltung oder ausgangseitiges Schaltmittel sind in der Fig. 1 nicht dargestellt. Diese Teile sind von bekannter Bauart und werden daher nicht näher erläutert.

Zur näheren Erläuterung des erfindungsgemäßen Auswerteverfahrens ist in den Fig. 2 und 3 der diesbezügliche Teil des von dem Mikroprozessor ausgeführten Steuerprogramms als Flußdiagramm dargestellt. Der Programmteil wird jeweils nach Empfang einer Signalperiode ausgeführt. Er beginnt in der Fig. 2 mit dem Block (10).

In einem darauf folgenden Unterprogrammblock (11) wird aus dem jeweils zuletzt gemessenen Wert der Periodendauer mittels Reziprokwertbildung ein Geschwindigkeitswert (V) berechnet. Hierbei wird üblicherweise eine sogenannte Divisionskonstante durch die Periodendauer dividiert, was bereits den Geschwindigkeitswert (V) ergibt. In der Divisionskonstante sind alle für eine korrekte Darstellung des Geschwindigkeitswertes (V) in einer physikalischen Einheit, z. B. Km/h, notwendigen Umrechnungsfaktoren zusammengefaßt.

Es ist in der Praxis außerdem üblich, in einem derartigen Unterprogrammblock (11) auch direkt die Programmschritte zur Messung der Periodendauer der Signalperioden vorzusehen. Derartige Programmschritte enthalten beispielsweise eine Timer-Steuerung, eine Interrupt-Steuerung und Programmschritte zur Verarbeitung der von dem Mikroprozessor erzeugten Zeit-Daten. Diese Programmschritte sind dem Fachmann im einzelnen bekannt bzw. kann er gegebenenfalls einem zu dem jeweiligen Mikroprozessor gehörigen Datenhandbuch entnehmen.

Daraufhin wird in einem Zuweisungsblock (13) ein für die Zählung der empfangenen Signalperioden vorgesehener Zähler (N) inkrementiert.

Sodann wird in einem Verzweigungsblock (14) untersucht, ob der in dem Unterprogrammblock (11) ermittelte Geschwindigkeitswert (V) sich gegenüber einem zuvor aufgetretenen Geschwindigkeitswert (VALT), der aufgrund einer zuvor aufgetretenen Signalperiode bestimmt wurde, vom Betrag her um einen relativ großen und daher unplausiblen Wert (DVMAX) geändert hat. Ist dies der Fall, so besteht zunächst ein Verdacht, daß das Polrad (1) eine Beschädigung aufweisen könnte. Dies wird in einem Zuweisungsblock (15) durch Inkrementierung eines Verdachtszählers (SP) registriert und für eine spätere Auswertung gespeichert. Falls jedoch die in dem Verzweigungsblock (14) untersuchte, betragsmäßige Geschwindigkeitsänderung (|V-VALT|) geringer ist als der schon erwähnte, höchstens zulässige Grenzwert (DVMAX), dann wird mangels Verdacht auf Beschädigung des Polrades (1) der Zuweisungsblock (15) übergangen.

Daraufhin wird mit den in der Fig. 3 dargestellten Programmsschritten fortgefahren.

In einem Verzweigungsblock (12) wird dann überprüft, ob aufgrund der bis dahin aufgetretenen Signalperioden eine oder mehrere vollständige Umdrehungen des Polrades (1) zu vermuten sind. Hierfür wird der Zähler (N) auf das Erreichen eines vorgegebenen Maximalwertes (NMAX) hin überprüft. Wenn der Maximalwert (NMAX) noch nicht erreicht ist, dann wird unter Umgehung der Programmschritte (18) bis (25) zu einem Zuweisungsblock (16) verzweigt, in dem der aktuell ermittelte Geschwindigkeitswert (V) für eine spätere Verwendung als Geschwindigkeitswert (VALT) gespeichert wird. Hierauf endet das Verfahren mit dem Block (17).

Falls jedoch in dem Verzweigungsblock (12) eine Übereinstimmung des Zählers (N) mit dem vorgegebenen Maximalwert (NMAX) festgestellt wird, so wird dies als Anzeichen für das Ende eines Überwachungszyklus angesehen, da eine vorbestimmte, auf eine oder mehrere vollständige Umdrehungen des Polrades (1) hinweisende Anzahl von Signalperioden empfangen wurde. Als Maximalwert (NMAX) kann z. B. die Soll-Anzahl von Signalperioden des jeweiligen Polrades verwendet werden, also bei dem Beispiel gemäß Fig. 1 könnte NMAX = 6 sein. Es ist auch möglich, einen Überwachungszyklus auf mehrere Umdrehungen des Polrades (1) auszudehnen, z. B. bei 10 Umdrehungen wäre NMAX = 60. Hierdurch kann insbesondere bei stark gestörten Signalen eine zuverlässige Erkennung von Beschädigungen an dem Polrad durchgeführt werden.

Falls eine wahlweise Verwendung von Polrädern mit unterschiedlicher Zähnezahl vorgesehen ist, z. B. mit 6, 8 und 9 Zähnen, so wird in vorteilhafter Weise als Maximalwert (NMAX) das kleinste gemeinsame Vielfache dieser Zähnezahlen verwendet, d.h. im vorliegenden Fall wäre NMAX = 72. Auch eine Kombination mit der zuvor beschriebenen Ausdehnung eines Überwachungszyklus auf mehrere Umdrehungen des Polrades (1) ist vorteilhaft.

Nach Erkennung der Übereinstimmung des Zählers (N) mit dem vorgegebenen Maximalwert (NMAX) in dem Verzweigungsblock (12) wird zunächst in einem Zuweisungsblock (18) der Zähler (N) auf seinen Anfangswert 0 zurückgesetzt.

Bei dem vorliegenden Ausführungsbeispiel ist zur Erkennung einer Beschädigung des Polrades (1) eine Durchführung von zwei Überwachungszyklen erforderlich, wobei in jedem Überwachungszyklus der Verdachtszähler (SP) wenigstens einen vorbestimmten Verdachtswert (SPMAX) erreichen muß und außerdem die ermittelten Verdachtszähler-Werte der beiden Überwachungszyklen wenigstens annähernd übereinstimmen müssen.

Der vorbestimmte Verdachtswert (SPMAX) dient vorrangig einer Plausibiltätskontrolle, wenn als Maximalwert (NMAX) ein Vielfaches der Soll-Anzahl von Signalperioden des jeweiligen Polrades verwendet wird. In einem solchen Fall würde ein in einer Anomalie des Polrades (1) begründeter, bei jeder Polradumdrehung wiederkehrender Signalfehler nach einer bestimmten Anzahl von Polradumdrehungen einen Zählerstand in dem Verdachtszähler (SP) hervorrufen, der dieser Anzahl von Polradumdrehungen entspricht, sofern die durch die Anomalie bewirkte Geschwindigkeitsänderung ausreichend groß ist. Daher wird als Verdachtswert (SPMAX) vorzugsweise die für einen Überwachungszyklus festgelegte Anzahl von Polradumdrehungen verwendet.

Zum Vergleich des Verdachtszählers (SP) mit einem in einem vorangegangenen Überwachungszyklus ermittelten Verdachtszähler-Wertes ist ein Speicher (SP2) vorgesehen. Dieser Speicher (SP2) wird außerdem zur Unterscheidung der Überwachungszyklen verwendet. In einem Verzweigungsblock (19) wird daher überprüft, ob in dem Speicher (SP2) bereits ein den vorbestimmten Verdachtswert (SPMAX) erreichender Wert vorliegt. Da ein derartiger Wert nur aufgrund eines vorangegangenen Überwachungszyklus in dem Speicher (SP2) vorliegen kann, wird bei negativem Überprüfungsergebnis in dem Verzweigungsblock (19) mit dem für einen ersten Überwachungszyklus vorgesehenen Verzweigungsblock (20) fortgefahren.

In dem Verzweigungsblock (20) wird überprüft, ob der in den Blöcken (14, 15) ermittelte Verdachtszähler (SP) den vorbestimmten Verdachtswert (SPMAX) erreicht. Ist dies der Fall, so wird in einem Zuweisungsblock (21) der Verdachtszähler (SP) zwecks späterer Überprüfung in einem zweiten Überwachungszyklus in dem Speicher (SP2) gespeichert. Anderenfalls wird der Speicher (SP2) in einem Zuweisungsblock (24) auf einen neutralen Wert 0 gesetzt.

In beiden Fällen wird daraufhin in einem Zuweisungsblock (22) der Verdachtszähler (SP) auf seinen Anfangswert 0 zurückgesetzt. Nach hieran anschließender Ausführung des schon beschriebenen Zuweisungsblocks (16) endet daraufhin das Verfahren in dem Block (17).

Wenn schließlich in dem Verzweigungsblock (19) ein den vorbestimmten Verdachtswert (SPMAX) erreichender Wert in dem Speicher (SP2) festgestellt wurde, dann wird in einem darauffolgenden Verzweigungsblock (23) untersucht, ob eine wenigstens annähernde Übereinstimmung des Verdachtszählers (SP) mit dem Speicher (SP2) vorliegt. Als Kriterium für die annähernde Übereinstimmung dieser beiden Werte wird geprüft, ob der in dem Speicher (SP2) enthaltene Wert um mehr als ein Viertel des Wertes des Verdachtszählers (SP) von diesem in jeglicher Richtung abweicht. Wenn keine derartige Abweichung festgestellt wird, so kann mit hoher Wahrscheinlichkeit davon ausgegangen werden, daß die in dem Verzweigungsblock (14) festgestellten plötzlichen Änderungen des Geschwindigkeitswertes (V) nicht auf zufälligen, sporadischen Störeinflüssen beruhen, sondern die Änderungen des Geschwindigkeitswertes (V) eine gewisse Regelmäßigkeit aufweist. Daher wird in diesem Fall zu dem Block (25) verzweigt, in dem ein Fehlersignal aktiviert wird, durch das mittels der bereits beschriebenen Ausgestaltung des Steuergerätes (7) die Lampe (9) zur Signalisierung eines Fehlerzustandes eingeschaltet wird.

Hiernach wird in dem Zuweisungsblock (24) der Speicher (SP2) und in dem Zuweisungsblock (22) der Verdachtszähler (SP) jeweils auf seinen Anfangswert 0 zurückgesetzt. Es folgen die Blöcke (16, 17).

Das zuvor beispielhaft beschriebene Verfahren, bei dem zur Erkennung eines Fehlers die Ergebnisse aus zwei Überwachungszyklen miteinander verglichen werden, kann in vorteilhafter Weiterbildung selbstverständlich auch noch einen dritten oder weitere Überwachungszyklen enthalten. Zur Fehlererkennung können dann beispielsweise die Ergebnisse aller Überwachungszyklen auf eine wenigstens annähernde Übereinstimmung überprüft werden. Es ist auch möglich, eine Mehrheitsauswahl aus den Ergebnissen der Überwachungszyklen vorzunehmen, die am wenigstens wahrscheinlichen Ergebnisse zu eliminieren und sodann die verbleibenden Ergebnisse auf exakte Übereinstimmung zu überprüfen. Durch derartige Maßnahmen kann insbesondere bei einer höheren Wahrscheinlichkeit sporadischer Störungen in dem Sensorsignal eine unerwünschte Fehlererkennung und -anzeige vermieden werden.

## Patentansprüche

1. Auswerteverfahren für ein Ausgangssignal einer eine zyklische Bewegung abtastenden Sensoreinrichtung (1, 5), insbesondere eine Einrichtung zur Drehzahlerfassung, bei der das Ausgangssignal einen periodischen Zeitverlauf mit einer vorbestimmten Soll-Anzahl von Signalperioden bei jedem Bewegungszyklus aufweist, mit folgenden Merkmalen:
a) es wird durch zeitliche Auswertung aufeinanderfolgender Signalperioden ein Periodenzeitwert bestimmt,
b) es wird die zeitliche Änderung des Periodenzeitwertes bzw. eines daraus abgeleiteten Geschwindigkeitswertes (V) bestimmt,
c) zur Feststellung eines vollständigen Bewegungszyklus werden die Signalperioden gezählt, bis wenigstens die Soll-Anzahl erreicht ist,
d) in einem ersten Überwachungszyklus, der wenigstens einen vollständigen Bewegungszyklus umfaßt, werden die ein vorbestimmtes Maß (DVMAX) überschreitenden Änderungen des Periodenzeitwertes bzw. des daraus abgeleiteten Geschwindigkeitswertes (V) mittels eines Verdachtszählers (SP) gezählt,
**gekennzeichnet durch** folgende Merkmale:
e) wenn der Verdachtszähler (SP) einen vorbestimmten Verdachtswert (SPMAX) erreicht oder überschreitet, wird ein zweiter, wenigstens einen vollständigen Bewegungszyklus umfassender Überwachungszyklus gestartet, in dem die ein vorbestimmtes Maß (DVMAX) überschreitenden Änderungen des Periodenzeitwertes bzw. des daraus abgeleiteten Geschwindigkeitswertes (V) gezählt werden,
f) wenn die in dem ersten und in dem zweiten Überwachungszyklus gezählten Änderungen des Periodenzeitwertes bzw. des daraus abgeleiteten Geschwindigkeitswertes (V) um weniger als ein vorbestimmtes Maß voneinander abweichen, wird ein Fehlersignal erzeugt.

2. Auswerteverfahren nach Patentanspruch 1, **dadurch gekennzeichnet, daß** der Periodenzeitwert durch Messung der jeweiligen Periodendauer der Signalperioden bestimmt wird.

3. Auswerteverfahren nach Patentanspruch 1, **dadurch gekennzeichnet, daß** der Periodenzeitwert durch Bestimmung der Anzahl von Signalperioden während eines Beobachtungszeitraumes bestimmt wird.

4. Auswerteverfahren nach einem der Patentansprüche 2 oder 3, **dadurch gekennzeichnet, daß** der ermittelte Periodenzeitwert mittels Reziprokwertbildung in einen Geschwindigkeitswert (V) umgewandelt wird.

5. Auswerteverfahren nach Patentanspruch 4, **dadurch gekennzeichnet, daß** als ein vorbestimmtes Maß (DVMAX) überschreitende Änderungen plötzliche Geschwindigkeitsänderungen (|V-VALT|) verwendet werden.

6. Auswerteverfahren nach einem der vorhergehenden Patentansprüche, **gekennzeichnet durch** die Verwendung an einer ein Impulsrad (1) und einen optisch oder magnetisch wirkenden Impulsdrehzahlgeber (5) aufweisenden Sensoreinrichtung.

7. Auswerteverfahren nach einem der vorhergehenden Patentansprüche, **gekennzeichnet durch** folgende Merkmale:
a) es wird ein Überwachungszyklus festgelegt, der wenigstens einen vollständigen Bewegungszyklus umfaßt,
b) zur Feststellung eines vollständigen Überwachungszyklus werden die Signalperioden gezählt, bis wenigstens ein vorbestimmter Maximalwert (NMAX) erreicht ist,
c) der Maximalwert (NMAX) ist ein Vielfaches der einen vollständigen Bewegungszyklus charakterisierenden Soll-Anzahl von Signalperioden,
d) das Fehlersignal wird erst dann erzeugt, wenn die während eines vollständigen Überwachungszyklus festgestellten, ein vorbestimmtes Maß (DVMAX) überschreitenden Änderungen des Periodenzeitwertes bzw. des daraus abgeleiteten Geschwindigkeitswertes (V) erneut auftreten, die in gleicher oder nahezu gleicher Weise bereits bei wenigstens einem vorhergehenden, vollständigen Überwachungszyklus aufgetreten sind.

8. Auswerteverfahren nach einem der vorhergehenden Patentansprüche, **gekennzeichnet durch** folgende Merkmale:
a) Die Soll-Anzahl von Signalperioden ist aus einer endlichen Menge festgelegter Soll-Anzahlen auswählbar,
b) zur Feststellung eines vollständigen Bewegungszyklus werden die Signalperioden gezählt, bis wenigstens das kleinste gemeinsame Vielfache der Elemente der Menge der Soll-Anzahlen erreicht ist.

## Claims

1. Method for the evaluation of an output signal of a sensor device (1, 5) that senses a cyclic movement, especially a device for detecting speed of rotation, in which device the output signal has a periodic time progression having a predetermined desired number of signal periods in each movement cycle, which method has the following features:
a) a periodic time value is determined by time-wise evaluation of successive signal periods,
b) the change over time of the periodic time value or of a velocity value (V) derived therefrom is determined,
c) in order to establish one complete movement cycle, the signal periods are counted until at least the desired number has been reached,
d) in a first monitoring cycle that comprises at least one complete movement cycle, the changes in the periodic time value or in the velocity value (V) derived therefrom that exceed a predetermined amount (DVMAX) are counted by means of a suspicion counter (SP),
**characterized by** the following features:
e) when the suspicion counter (SP) has reached or exceeded a predetermined suspicion value (SPMAX), a second monitoring cycle comprising at least one complete movement cycle is started, in which second monitoring cycle the changes in the periodic time value or in the velocity value (V) derived therefrom that exceed a predetermined amount (DVMAX) are counted,
f) when the changes in the periodic time value or in the velocity value (V) derived therefrom counted in the first and second monitoring cycles differ from one another by less than a predetermined amount an error signal is produced.

2. Evaluation method according to patent claim 1, **characterized in that** the periodic time value is determined by measuring the respective periodic durations of the signal periods.

3. Evaluation method according to patent claim 1, **characterized in that** the periodic time value is determined by determining the number of signal periods during an observation period.

4. Evaluation method according to either patent claim 2 or 3, **characterized in that** the periodic time value determined is converted into a velocity value (V) by means of reciprocal value formation.

5. Evaluation method according to patent claim 4, **characterized in that** sudden changes in velocity (|V-VALT|) are used as changes that exceed a predetermined amount (DVMAX).

6. Evaluation method according to any one of the preceding patent claims, **characterized by** use at a sensor device comprising a pulse wheel (1) and an optically or magnetically operating pulse-type rotary speed transmitter (5).

7. Evaluation method according to any one of the preceding patent claims,
**characterized by** the following features:
a) a monitoring cycle is established, which comprises at least one complete movement cycle,
b) in order to establish a complete monitoring cycle, the signal periods are counted until at least a predetermined maximum value (NMAX) has been reached,
c) the maximum value (NMAX) is a multiple of the desired number of signal periods **characterizing** one complete movement cycle,
d) the error signal is produced only after the changes in the periodic time value or in the velocity value (V) derived therefrom that exceed a predetermined amount (DVMAX) and are established during a complete monitoring cycle occur again, the changes having already occurred in identical or virtually identical manner in at least one preceding complete monitoring cycle.

8. Evaluation method according to any one of the preceding patent claims,
**characterized by** the following features:
a) the desired number of signal periods can be selected from a finite set of established desired numbers,
b) to establish a complete movement cycle, the signal periods are counted until at least the smallest common multiple of the elements of the set of desired numbers has been reached.

## Revendications

1. Procédé d'évaluation pour un signal de sortie d'un dispositif de détection (1, 5), qui explore un déplacement cyclique, notamment un dispositif de détection de la vitesse de rotation, selon lequel le signal de sortie possède une allure périodique dans le temps avec un nombre de consigne prédéterminé de périodes du signal lors de chaque cycle de déplacement, présentant les caractéristiques suivantes:
a) on détermine une durée de période par évaluation temporelle de périodes successives du signal,
b) on détermine la variation dans le temps de la durée de période ou d'une valeur de vitesse (V) qui en est dérivée,
c) pour déterminer un cycle de déplacement complet, on compte les périodes du signal, jusqu'à ce qu'au moins la valeur de consigne soit atteinte,
d) dans un premier cycle de contrôle, qui comprend au moins un cycle de déplacement complet, on compte les variations, qui dépassent une valeur prédéterminée (DVMAX) de la durée de période ou de la valeur de vitesse (V), qui en est dérivée, au moyen d'un compteur de cas douteux (SP),
**caractérisé par** les caractéristiques suivantes:
e) lorsque le compteur de cas douteux (SP) atteint ou dépasse une valeur de doute prédéterminée (SPMAX), au moins un cycle de contrôle englobant un premier cycle de déplacement complet démarre, cycle de contrôle dans lequel les variations, qui dépassent une valeur prédéterminée (DVMAX) de la durée de période ou de la valeur de vitesse (V), qui en est dérivée, sont comptées,
f) lorsque les variations de la durée de période, comptées dans les premier et second cycles de contrôle, ou la valeur de vitesse (V), qui en est dérivée, diffèrent entre elles de moins d'une valeur prédéterminée, un signal d'erreur est produit.

2. Procédé d'évaluation selon la revendication 1, **caractérisé en ce que** la durée de période est déterminée par mesure de la durée respective des périodes du signal.

3. Procédé d'évaluation selon la revendication 1, **caractérisé en ce que** la durée de période est déterminée par détermination du nombre de périodes du signal pendant un intervalle de temps d'observation.

4. Procédé d'évaluation selon l'une des revendications 2 ou 3, **caractérisé en ce que** la valeur de période déterminée est convertie au moyen d'une formation de la valeur inverse en une valeur de vitesse (V).

5. Procédé d'évaluation selon la revendication 4, **caractérisé en ce qu'**on utilise des variations brusques de vitesse (|V-VALT|) en tant que variations, qui dépassent une valeur prédéterminée (DVMAX).

6. Procédé d'évaluation selon l'une des revendications précédentes, **caractérisé par** son utilisation dans un dispositif de détection comportant une roue (1) produisant des impulsions et un générateur de vitesse de rotation à impulsions (5) qui agit optiquement ou magnétiquement.

7. Procédé d'évaluation selon l'une des revendications précédentes, **caractérisé par** les caractéristiques suivantes:
a) on fixe un cycle de contrôle, qui inclut au moins un cycle de déplacement complet,
b) pour déterminer un cycle de contrôle complet, on compte les périodes du signal, jusqu'à ce qu'une valeur maximale prédéterminée (NMAX) soit obtenue,
c) la valeur maximale (NMAX) est un multiple de la valeur de consigne de périodes du signal, qui **caractérise** un multiple du cycle de déplacement complet,
d) le signal d'erreur est produit uniquement lorsque les variations, fixées pendant un cycle de contrôle complet et dépassant une valeur prédéterminée (DVMAX), lorsque les variations de la durée de période ou de la valeur de vitesse (V) qui en est dérivée, qui sont fixées pendant un cycle de contrôle complet et dépassent une valeur prédéterminée (DVMAX) et qui sont déjà apparues de la même manière ou presque de la même manière lors d'au moins un cycle de contrôle complet précédent, apparaissent à nouveau.

8. Procédé d'évaluation selon l'une des revendications précédentes, **caractérisé par** les caractéristiques suivantes:
a) le nombre de consigne de périodes du signal peut être sélectionné à partir d'une quantité finie de nombres de consigne fixés,
b) pour la détermination d'un cycle de déplacement complet, on choisit les périodes du signal jusqu'à ce que soit atteint au moins le plus petit commun multiple des éléments de l'ensemble des nombres de consigne.
